# EUROPÄISCHE PATENTANMELDUNG

(11) **EP 4 697 058 A1**
(43) Veröffentlichungstag der Anmeldung: **18.02.2026**
(21) Anmeldenummer: 25193748.8
(22) Anmeldetag: 04.08.2025
(51) Int. Cl.: G01S 7/00, G01S 13/42, G01S 13/536

(54) **DATENÜBERTRAGUNG MITTELS EINES MESSSIGNALS**

(30) Priorität: 16.08.2024 DE 102024002651
(71) Anmelder: Diehl Defence GmbH & Co. KG, 88662 Überlingen (DE)
(72) Erfinder: Barth, Robin, 91448 Emskirchen (DE)
(74) Vertreter: Diehl Patentabteilung

(57) **Zusammenfassung**

Die Erfindung betrifft ein Verfahren (100), bei welchem mehrere Messsignale emittiert werden (102). Auf Grundlage der emittierten (102) Messsignale werden Daten von einem ersten Kommunikationsteilnehmer zu einem zweiten Kommunikationsteilnehmer übermittelt (104). Ferner wird auf Grundlage von Reflexionen, welche von wenigstens einem der mehreren Messsignale ausgehen, eine Richtungs- und Abstandsmessung mittels des ersten Kommunikationsteilnehmers durchgeführt wird (106).

## Beschreibung

Die Erfindung betrifft ein Verfahren, ein System zur Durchführung des Verfahrens, ein Computerprogramm sowie ein computerlesbares Medium.

Bei Sensor-Effektor-Systemen, welche beispielsweise zum Zwecke einer Luftverteidigung vorgesehen sind, werden Daten zwischen Sensoren und zentralen Steuervorrichtungen mittels Kommunikationsleitungen übermittelt. Die Kommunikationsleitungen sind üblicherweise als Lichtwellenleiter ausgeführt. Auf diese Weise können Daten rasch übermittelt werden, ohne dass mittels der Sensoren durchgeführte Messungen gestört werden. Allerdings müssen die Kommunikationsleitungen manuell verlegt und im Falle einer Verlegung eines Sensors und/oder einer zentralen Steuervorrichtung des Sensor-Effektor-Systems üblicherweise manuell verlegt werden. Im Falle einer Beschädigung der Kommunikationsleitung wird eine Datenübertragung unterbrochen. Zwar ist es bereits bekannt, Daten zwischen einem Sensor und einer zentralen Steuervorrichtung anhand einer Funkverbindung zu übermitteln. Jedoch werden bislang für derartige Datenübertragungen Frequenzen gewählt und/oder Antennen eingesetzt, welche Messungen durch den Sensor stören können. Darüber hinaus besteht die Gefahr, dass eine Position des Sensors und/oder der zentralen Steuervorrichtung auf Basis der zusätzlich für die Datenübertragung genutzten Frequenzen lokalisiert werden können. Üblicherweise werden bei den Sensor-Effektor-Systemen Radare als Sensoren verwendet, welche Daten an ein taktisches Lagezentrum übermitteln. Um möglichst zuverlässig und frühzeitig Aktivitäten erkennen zu können, ist es daher von Vorteil, ein als Radar ausgeführter Sensor möglichst nahe bei einem Gegner zu positionieren. Dies geht jedoch mit einer hohen Gefahr für Einsatzkräfte und das Radar einher, welche dadurch gleichfalls leichter aufklärbar sind. Um einer Aufklärung und/oder Zerstörung des Radars vorzubeugen, wird daher das Radar häufig versetzt. Dabei stellt die Herstellung einer Kommunikationsverbindung mittels der Kommunikationsleitung einen besonders großen Aufwand dar. Insbesondere verursacht die Inbetriebnahme der Kommunikationsverbindung einen hohen Zeitbedarf. Währenddessen kann das Radar keine Messdaten liefern.

Der Erfindung liegt die Aufgabe zugrunde, ein verbessertes Verfahren zur Kommunikation mit einem Sensor bereitzustellen.

Diese Aufgabe wird gelöst durch ein Verfahren mit den Merkmalen des Anspruchs 1.

Des Weiteren liegt der Erfindung die Aufgabe zugrunde, ein System zur Durchführung des erfindungsgemäßen Verfahrens bereitzustellen.

Diese Aufgabe wird gelöst durch ein System mit den Merkmalen des Anspruchs 9.

Darüber hinaus liegen der Erfindung die Aufgaben zugrunde, ein Computerprogramm sowie ein computerlesbares Medium anzugeben.

Diese Aufgaben werden gelöst durch ein Computerprogramm mit den Merkmalen des Anspruchs 14 sowie durch ein computerlesbares Medium mit den Merkmalen des Anspruchs 15.

Vorteilhafte Weiterbildungen sind jeweils Gegenstand abhängiger Unteransprüche.

Das erfindungsgemäße Verfahren sieht vor, dass mehrere Messsignale emittiert werden. In einer bevorzugten Ausführungsvariante werden die mehreren Messsignale mittels eines Richtungs- und Abstandsmessgeräts emittiert. Des Weiteren ist vorgesehen, dass mittels der emittierten Messsignale Daten von einem ersten Kommunikationsteilnehmer zu einem zweiten Kommunikationsteilnehmer übermittelt werden. Überdies wird auf Grundlage einer Reflexion wenigstens eines der mehreren Messsignale eine Richtungs- und Abstandsmessung mittels des ersten Kommunikationsteilnehmers durchgeführt. Bevorzugterweise handelt es sich bei dem ersten Kommunikationsteilnehmer um ein Richtungs- und Abstandsmessgerät, wie beispielsweise ein Radar oder ein Lidar. Zweckmäßigerweise handelt es sich bei dem Messsignal um eine elektromagnetische Welle, welche mittels des ersten Kommunikationsteilnehmers emittiert wird.

Auf diese Weise kann das Messsignal als Datenübertragungssignal genutzt werden. Die zu übermittelnden Daten können dadurch in den Messsignalen versteckt werden. Darüber hinaus ist auf diese Weise eine kabellose Datenübertragung bereitstellbar. Beispielsweise kann ein als Sensor ausgeführter Kommunikationsteilnehmer auf diese Weise kabellos mit weiteren Kommunikationsteilnehmern, wie einem weiteren Sensor, einer zentralen Steuervorrichtung, einem taktischen Lagezentrum und/oder einem Effektor, kommunizieren. Von einer Nutzung zusätzlich aufklärbarer Funkfrequenzen zum Zwecke einer Datenübertragung kann daher abgesehen werden. Darüber hinaus kann eine Störung der Richtungs- und Abstandsmessung aufgrund zusätzlich genutzter Funkfrequenzen vermieden werden. Ferner können bestehende Sendeeinrichtungen eines Richtungs- und Abstandsmessgeräts zum Zwecke der Datenübertragung genutzt werden. Im einzelnen Anwendungsfall kann zudem eine bestehende Empfangseinrichtung des Richtungs- und Abstandsmessgeräts zum Zwecke der Datenübertragung genutzt werden.

Eine vorteilhafte Weiterbildung sieht vor, dass Messsignale vorbestimmter Frequenz der mehreren Messsignale nach Maßgabe einer vorbestimmten Reihenfolge emittiert werden. Auf Grundlage der vorbestimmten Reihenfolge der emittierten Messsignale mit jeweils vorbestimmter Frequenz können sodann in die Messsignale integrierte Daten von einem ersten Kommunikationsteilnehmer zu einem zweiten Kommunikationsteilnehmer übermittelt werden. Messsignale, welche in der Regel gemäß eines Zufallsprinzips mit vorzugsweise unterschiedlichen Frequenzen zum Zwecke einer Richtungs- und Abstandsmessung emittiert werden, können dadurch aufwandsgünstig mit vorbestimmten Informationen verknüpft werden. Insbesondere kann dadurch ein auf einfache Weise verschlüsselbares System zum Zwecke der Datenübertragung bereitgestellt werden. Dies ermöglicht es, eine hohe Abhörsicherheit bereitzustellen.

In einer bevorzugten Ausführungsvariante wird einer vorbestimmten Frequenz eines Messsignals der mehreren Messsignale eine vorbestimmte Information zugeordnet. Bei der vorbestimmten Information handelt es sich vorzugsweise um eine binäre Information, eine Dezimalzahl, eine Hexadezimalzahl und/oder eine binäre, dezimale oder hexadezimale Zeichenfolge. Des Weiteren ist vorgesehen, dass die zu übermittelnden Daten auf Grundlage der vorbestimmten Informationen nachgebildet werden. Auf diese Weise können die zu übermittelnden Daten durch die vorbestimmten Informationen repräsentiert werden. Nach Maßgabe einer Reihenfolge der die zu übermittelnden Daten nachbildenden und vorbestimmten Informationen werden sodann die jeweils diesen Informationen zugeordneten Messsignale mit der vorbestimmten Frequenz emittiert. Unter Kenntnis der genannten Zuordnung können daher zu übermittelnde Daten auf Grundlage einer Emission von Messsignalen vorbestimmter Frequenz übermittelt werden. Alternativ oder zusätzlich können mit einem Messsignal mehrere Frequenzen emittiert werden. Dadurch kann ein Informationsgehalt eines Messsignals und damit eine Datenübertragungsrate verbessert werden. Auf Grundlage der Zuordnung der vorbestimmten Information zu einer vorbestimmten Frequenz kann des Weiteren eine beliebig komplexe Verschlüsselung zum Zwecke der Datenübertragung gewählt werden. Dadurch kann eine hohe Übertragungssicherheit bereitgestellt werden. Ferner kann mithilfe einer regelmäßigen Änderung der genannten Zuordnung eine Übertragungssicherheit weiter erhöht erhöhen.

Eine Art und eine Länge der vorbestimmten Information kann aufwandsgünstig an eine Art und eine Länge von zu übermittelnden Daten angepasst werden. Für verschiedene Anwendungsfälle können zu übermittelnde Daten daher bedarfsgerecht auf Grundlage verschiedenartiger Informationen nachgebildet werden. Dadurch kann auf einfache Weise eine Reihenfolge der zu emittierenden und den jeweils vorbestimmten Informationen zugeordneten Messsignale vorbestimmter Frequenz ermittelt werden. Dadurch ist ein aufwandsgünstig anpassbares und sicheres Verfahren zu Übermittlung der Daten bereitstellbar.

Vorzugsweise werden als die mehreren Messsignale jeweils Funkwellen mit vorbestimmter Pulsdauer emittiert. Besonders bevorzugt werden diese Funkwellen mittels eines als Radar ausgeführten Richtungs- und Abstandsmessgeräts emittiert. Zusätzlich oder alternativ zu einer kabelgebundenen Datenübertragung kann dadurch eine kabellose Datenübertragung realisiert werden. Im bevorzugten Anwendungsfall kann eine bereits vorhandene Sendeeinrichtung zum Zwecke der Datenübertragung genutzt werden. Von einer Verwendung weiterer Schnittstellen kann im bevorzugten Anwendungsfall abgesehen werden. Dadurch kann eine rasche Inbetriebnahme eines Radars ermöglicht werden. Dieser kann mit nur geringer Vorbereitungszeit in ein Sensor-Effektor-System eingebunden werden. Im militärischen Anwendungsfall ermöglicht dies eine schnelle Verlegung und Wiederherstellung einer Einsatzbereitschaft eines Radars, um beispielsweise einem Luftverteidigungssystem wichtige Daten zu liefern.

Eine andere vorteilhafte Weiterbildung sieht vor, dass mittels der emittierten Messsignale Daten anisotrop von einem ersten Kommunikationsteilnehmer zu einem zweiten Kommunikationsteilnehmer übermittelt werden.

Unter einer anisotropen Übermittlung soll im vorliegenden Zusammenhang verstanden werden, dass mittels der Messsignale die zu übermittelnden Daten lediglich in einem vorbestimmten Raumabschnitt, vorzugsweise in einem Raumabschnitt, in welchem ein vorgesehener Empfänger angeordnet ist, emittiert werden. In übrige Raumabschnitte können dadurch andere Daten oder keine Daten übermittelt werden. Beispielsweise können in übrige Raumabschnitte Messsignale mit zufällig ausgewählten Frequenzen zum Zwecke einer Durchführung der Richtungs- und Abstandsmessung emittiert werden.

Eine andere vorteilhafte Weiterbildung sieht vor, dass die zu übermittelnden Daten mittels eines weiteren Kommunikationsteilnehmers von dem ersten Kommunikationsteilnehmer zu dem zweiten Kommunikationsteilnehmer weitergeleitet werden. Dies ermöglicht es, ein vermaschtes Netzwerk zu bilden. Daten können dadurch an Kommunikationsteilnehmer übermittelt werden, welche keinen unmittelbaren Sichtkontakt zu einem Sender aufweisen. Im bevorzugten Anwendungsfall kann dadurch im Falle eines Ausfalls eines Kommunikationsteilnehmers oder einer Kommunikationsleitung weiterhin eine Übermittlung der Daten bereitgestellt werden. Daher kann eine hohe Verfügbarkeit der zu übermittelnden Daten bereitgestellt werden. Bevorzugterweise sind mehrere der weiteren Kommunikationsteilnehmer vorgesehen. Dadurch kann ein zuverlässiges und ausfallsicheres vermaschtes Netzwerk bereitgestellt werden. Beispielsweise können dadurch Daten zielgerichtet von einem Sender hin zu einem vorbestimmten Empfänger übermittelt werden oder die Daten können unabhängig von einem Empfänger an alle Kommunikationsteilnehmer des vermaschten Netzwerks weitergeleitet werden.

Ist das Richtungs- und Abstandsmessgerät als ein Radar ausgeführt, so kann während eines Normalbetriebs des Radars eine abgestrahlte Sendeleistung dazu genutzt werden, Daten mit einer hohen Reichweite kabellos zu übermitteln. Bereits vorhandene Sendeeinrichtungen des Radars können zum Zwecke der Datenübertragung aufwandsgünstig genutzt werden. Von einer Nutzung weiterer Schnittstellen des Radars kann dahingegen abgesehen werden. Im Falle, dass das Radar Teil eines Sensor-Effektor-Systems ist, kann im bevorzugten Anwendungsfall auf eine Kommunikationsleitung zwischen dem Radar unter dem taktischen Lagezentrum verzichtet werden.

Ferner sieht die Erfindung ein System vor, mittels welchem das erfindungsgemäße Verfahren durchführbar ist.

Das erfindungsgemäße System weist mehrere Kommunikationsteilnehmer auf, zwischen welchen Daten kabellos übermittelbar sind. Ein erster der mehreren Kommunikationsteilnehmer ist dazu eingerichtet, mittels eines Messsignals Daten zu übermitteln. Vorzugsweise handelt es sich bei dem ersten Kommunikationsteilnehmer um einen Sensor eines Sensor-Effektor-Systems, mittels welchem eine Richtungs- und Abstandsmessung durchführbar ist. Besonders bevorzugt ist der erste Kommunikationsteilnehmer als ein Radar ausgeführt, mittels welchem Funkwellen emittierbar sind. Ein zweiter der mehreren Kommunikationsteilnehmer ist dazu eingerichtet, die anhand des Messsignals übermittelnden Daten zu empfangen.

Auf diese Weise kann ein einfach handhabbares System bereitgestellt werden. Zu übermittelnde Daten können dadurch in Messsignale integriert und auf diese Weise in diesen versteckt werden. Des Weiteren kann die Datenübertragung auf Grundlage verschiedener Frequenzen eines Messsignals realisiert werden. Dies ermöglicht es, eine hohe Abhörsicherheit und eine hohe Ausfallsicherheit bereitstellen zu können. Des Weiteren kann eine hohe Übertragungssicherheit ermöglicht werden. Ferner ist dadurch ein einfach handhabbares System bereitstellbar. Zudem kann das System aufwandsgünstig und rasch in Betrieb genommen werden.

Vorzugsweise bilden die mehreren Kommunikationsteilnehmer ein vermaschtes Netzwerk. Unter einem vermaschten Netzwerk soll im vorliegenden Zusammenhang ein Netzwerk im Sinne der Informationstechnik verstanden werden, bei welchem von jedem Kommunikationsteilnehmer der mehreren Kommunikationsteilnehmer wenigstens eine Möglichkeit zum Zwecke einer Datenübertragung zu jedem anderen der mehreren Kommunikationsteilnehmer besteht. Bevorzugterweise bestehen wenigstens zwei Möglichkeiten zum Zwecke der Datenübertragung zu jedem anderen der mehreren Kommunikationsteilnehmer. Des Weiteren werden vorzugsweise die zu übertragenden Daten solange von einem der mehreren Kommunikationsteilnehmer zu einem weiteren der mehreren Kommunikationsteilnehmer weitergeleitet, bis diese einen vorbestimmten Empfänger erreichen. Alternativ oder zusätzlich kann vorgesehen sein, dass die zu übermittelnden Daten in dem vermaschten Netzwerk ohne einen vorbestimmten Empfänger von einem zu einem weiteren der mehreren Kommunikationsteilnehmer weitergeleitet werden. Auf diese Weise kann ein vermaschtes Broadcastnetzwerk bereitgestellt werden. Von einem Kommunikationsteilnehmer der mehreren Kommunikationsteilnehmer aus können dadurch die zu übermittelnden Daten an alle übrigen der mehreren Kommunikationsteilnehmer übermittelt werden. Dies ermöglicht es, auf eine zuverlässige Weise die zu übermittelnden Daten entweder an einen vorbestimmten Empfänger oder an beliebige Empfänger zu übermitteln. Insbesondere können dadurch Daten an Empfänger übermittelt werden, welche außerhalb eines Sichtbereichs eines Senders angeordnet sind. Dadurch kann eine Verfügbarkeit der Daten auf einfache Weise gesteigert werden. Im Falle einer Betriebsunterbrechung oder einer Zerstörung einer der mehreren Kommunikationsteilnehmer, kann mittels weiterer der mehreren Kommunikationsteilnehmer die Datenübertragung aufrechterhalten werden. Dies ermöglicht es, ein fehlertolerantes System bereitzustellen, mittels welchem im Falle eines Ausfalls eines Kommunikationsteilnehmers weiterhin Daten übermittelt werden können.

Zweckmäßigerweise ist zumindest der erste der mehreren Kommunikationsteilnehmer als ein Richtungs- und Abstandsmessgerät ausgeführt. Insbesondere ist das Richtungs- und Abstandsmessgerät als ein Radar der zuvor beschriebenen Art ausgeführt. Vorzugsweise ist das Richtungs- und Abstandsmessgerät dazu eingerichtet, Messsignale in Form von elektromagnetischen Wellen zu emittieren. Des Weiteren ist das Richtungs- und Abstandsmessgerät dazu eingerichtet, Daten mittels Messsignalen zu übertragen. Mithilfe der emittierten Messsignale kann aufwandsgünstig eine Datenübertragung mit hoher Abhörsicherheit realisiert werden. Messsignale können auf diese Weise als Datenübertragungssignale genutzt werden, ohne dass ein Betrieb oder eine Leistungsfähigkeit des Richtungs- und Abstandsmessgeräts beeinträchtigt wird. Eine üblicherweise hohe Strahlungsleistung eines als Radar ausgeführten Richtungs- und Abstandsmessgeräts kann überdies dazu genutzt werden, um Daten kabellos über eine große Distanz zu übermitteln. Im Falle einer Zerstörung einer Kommunikationsleitung kann dennoch eine Kommunikationsverbindung zwischen dem Radar und anderen Radaren, einem Effektor und/oder einem taktischen Lagezentrum aufrechterhalten werden. Im einzelnen Anwendungsfall kann gar auf eine kabelgebundene Kommunikationsverbindung verzichtet werden.

Beispielhaft ist das Richtungs- und Abstandsmessgerät dazu eingerichtet, auf Basis einer Reflexion von elektrisch magnetischen Wellen, wie beispielsweise Funkwellen oder Lichtwellen, eine Richtung sowie ein Abstand eines Objekts bezogen auf das Messgerät zu ermitteln. Dies ermöglicht es beispielsweise, einen vorbestimmten Luftraum zu überwachen. Bei dem Richtungs- und Abstandsmessgerät kann es sich neben einem Radar alternativ oder zusätzlich um ein Lidar handeln.

In einer bevorzugten Weiterbildung weist zumindest ein Teil der mehreren Kommunikationsteilnehmer eine separate Empfangseinrichtung für die zu übermittelnden Daten auf. Mittels der separaten Empfangseinrichtungen sind vorzugsweise durch den ersten Kommunikationsteilnehmer emittierte Messsignale empfangbar. Bei der separaten Empfangseinrichtung handelt es sich vorzugsweise um eine Antenne. In einer besonders bevorzugten Ausführungsvariante handelt es sich um eine isotrope Antenne, mittels welcher unabhängig von einer entsandten Richtung der Messsignale diese sowie die zu übermittelnden Daten empfangbar sind. Mithilfe der separaten Empfangseinrichtung für die zu übermittelnden Daten kann daher ein zuverlässiger und sicherer Empfang der genannten Daten ermöglicht werden. Weiterhin können Reflexionen der emittierten Messsignale mittels einer hierfür vorgesehenen Empfangseinrichtung des Richtungs- und Abstandsmessgeräts empfangen werden.

In einer bevorzugten Ausführungsform ist wenigstens ein Kommunikationsteilnehmer der mehreren Kommunikationsteilnehmer als ein taktisches Lagezentrum ausgeführt. Unter dem taktischen Lagezentrum soll ein Lagezentrum im militärischen Sinne verstanden werden, in welchem taktische Maßnahmen ermittelt, koordiniert und ergriffen werden. Bevorzugterweise ist das taktische Lagezentrum Teil eines Sensor-Effektor-Systems, mittels welchem beispielsweise eine Luftverteidigung durchgeführt wird. Dies ermöglicht es, eine Kommunikation zwischen einem oder mehreren Radaren und einem taktischen Lagezentrum auf eine ausfallsichere und zuverlässige Weise bereitzustellen. Ferner können Standorte der Radare und/oder des taktischen Lagezentrums bedarfsgerecht gewählt werden. Eine Restriktion einer Standortwahl aufgrund einer Länge oder eines Verlaufs einer Kommunikationsleitung kann im bevorzugten Anwendungsfall umgangen werden.

Besonders bevorzugt handelt es sich bei dem erfindungsgemäßen System um ein Sensor-Effektor-System. Dabei ist wenigstens einer der mehreren Kommunikationsteilnehmer als ein Effektor ausgeführt. Besonders bevorzugt weist der genannte Effektor die oben genannte separate Empfangseinrichtung auf. Dadurch können sowohl unmittelbar mittels des taktischen Lagezentrums als auch unmittelbar mittels eines Sensors, wie beispielsweise eines Radars, taktische Informationen oder Standortinformationen an den Effektor übermittelt werden. Beispielsweise kann dadurch dem Effektor unmittelbar durch ein Radar dessen Standort und/oder Flugbahn mitgeteilt werden. Dadurch kann eine Treffsicherheit erhöht werden. Ferner können so Standort- und/oder Bewegungsdaten eines Ziels mit hoher Qualität an den Effektor sowie übrige Kommunikationsteilnehmer übermittelt werden.

Überdies sieht die Erfindung ein Computerprogramm vor, welches bei dessen Ausführung das System gemäß der Erfindung dazu veranlasst, das erfindungsgemäße Verfahren durchzuführen.

Ferner sieht die Erfindung ein computerlesbares Medium vor. Dieses weist Instruktionen auf, welche das erfindungsgemäße System dazu veranlassen, das erfindungsgemäße Verfahren durchzuführen. Bei dem computerlesbaren Medium kann es sich beispielsweise um eine CD-ROM, eine DVD, einen USB- oder Flash-Speicher oder um ein nicht körperliches Medium, wie einen Datenstrom und/oder ein digitales Trägersignal handeln.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale sowohl mit dem erfindungsgemäßen Verfahren als auch mit dem erfindungsgemäßen System gemäß den jeweils unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, welche im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden. Bei den im Folgenden beschriebenen Figuren handelt es sich um schematische, nicht maßstabsgetreue Darstellungen.

Es zeigen:
- FIG 1: ein Ausführungsbeispiel eines erfindungsgemäßen Systems sowie eine Illustration des eines Beispiels des erfindungsgemäßen Verfahrens;
- FIG 2: eine weitere Illustration des Beispiels des Verfahrens anhand eines schematischen Ablaufdiagramms.

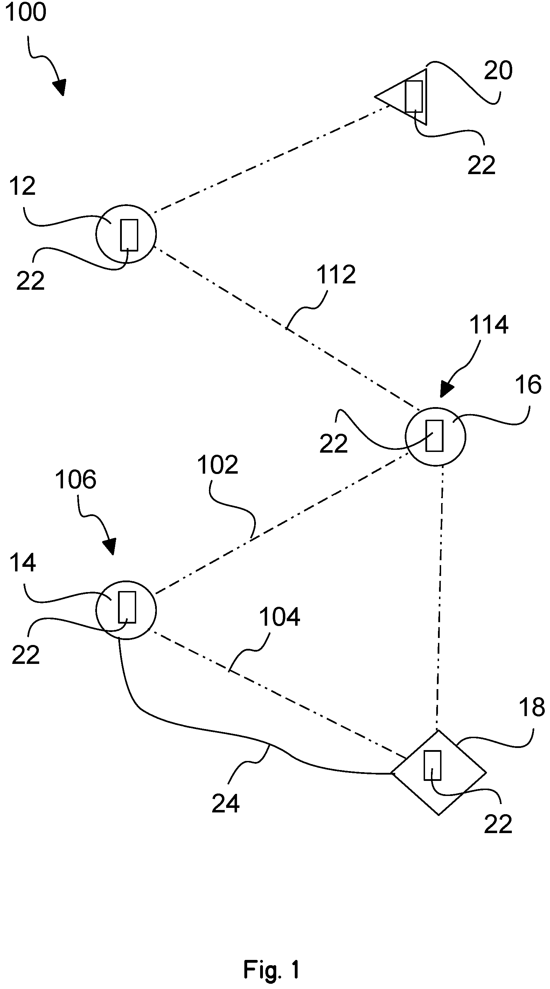

FIG 1 illustriert ein Beispiel eines Verfahrens 100, bei welchem mittels Messsignalen Daten übermittelt werden 104. Des Weiteren zeigt Figur 1 in einer schematischen Darstellung ein Ausführungsbeispiel eines Systems 10, mittels welchem das Beispiel des Verfahrens 100 durchgeführt wird. Das System 10 ist beispielhaft als ein Sensor-Effektor-System 10 ausgeführt, welches dazu eingerichtet ist, einen nicht näher dargestellten Luftraum zu überwachen und/oder zu verteidigen.

Das System 10 weist beispielhaft fünf Kommunikationsteilnehmer 12, 14, 16, 18, 20 auf. Zwischen den fünf Kommunikationsteilnehmern 12, 14, 16, 18, 20 sind Kommunikationsverbindungen vorgesehen. Beispielhaft sind zwischen allen fünf Kommunikationsteilnehmern 12, 14, 16, 18, 20 kabellose Kommunikationsverbindungen vorgesehen, welche schematisch mittels Strich-Punkt-Linien illustriert sind. Ferner ist eine Kommunikationsleitung 24 vorgesehen, mittels welcher exemplarisch eine kabelgebundene Kommunikationsverbindung realisiert wird. Vorliegend bilden die fünf Kommunikationsteilnehmer 12, 14, 16, 18, 20 ein vermaschtes Netzwerk zum Zwecke einer Datenübertragung. In dem vorliegend beispielhaft gebildeten vermaschten Netzwerk besteht wenigstens eine Möglichkeit, Daten von einem zu jedem anderen der fünf Kommunikationsteilnehmer 12, 14, 16, 18, 20 zu übermitteln 104.

Zum Zwecke der Luftraumüberwachung sind beispielhaft drei der fünf Kommunikationsteilnehmer 12, 14, 16, 18, 20 als ein Radar 12, 14, 16 ausgeführt. Diese Radare 12, 14, 16 sind jeweils dazu eingerichtet, eine Richtungs- und Abstandsmessung durchzuführen 106. Dadurch können sich in dem überwachten Luftraum befindliche oder in diesen eindringende Objekte erfasst und bevorzugterweise identifiziert werden. Ein weiterer der fünf Kommunikationsteilnehmer 12, 14, 16, 18, 20 ist als ein taktisches Lagezentrum 18 ausgeführt, in welchem taktische Maßnahmen ermittelt und koordiniert werden. Des Weiteren ist exemplarisch ein übriger der fünf Kommunikationsteilnehmer 12, 14, 16, 18, 20 als Effektor 20 ausgeführt, mittels welchem ein Ziel bekämpft werden kann. Beispielhaft ist zwischen dem taktischen Lagezentrum 18 und einem Radar 14 der drei Radare 12, 14, 16 die Kommunikationsleitung 24 zum Zwecke einer Datenübertragung angeordnet. Die Kommunikationsleitung 24 ist beispielhaft als Lichtwellenleiter ausgeführt.

Zur Durchführung 106 der Richtungs- und Abstandsmessung werden mittels der Radare 12, 14, 16 jeweils Messsignale mit einer vorbestimmten Pulsdauer emittiert 102. Auf Grundlage von Reflexionen der genannten emittierten 102 Messsignale werden daraufhin Objekte in dem besagten Luftraum ermittelt und/oder identifiziert. Um externen Störeinflüssen zu begegnen, wird in dieser Betriebsweise nach Maßgabe eines Zufallsprinzips bislang jedem Messsignal mit einer vorbestimmten Pulsdauer eine andere Frequenz zugeordnet. Dadurch wird eine hohe Störfestigkeit erreicht. Im Unterschied dazu werden vorliegend Messsignale vorbestimmter Frequenz nach Maßgabe einer vorbestimmten Reihenfolge emittiert 102, um mittels der Messsignale Daten zu übermitteln 104. Weiterhin werden daher Messsignale mit unterschiedlicher Frequenz emittiert 102, wodurch eine Störfestigkeit allenfalls unwesentlich beeinträchtigt wird. Messsignale und Datenübertragungssignale könne dadurch effizient kombiniert werden. Mittels nicht näher dargestellter Sendeeinrichtungen der Radare 12, 14. 16, welche dazu eingerichtet sind, Messsignale zu emittieren 102, können daher Daten mittels des zuvor genannten vermaschten Netzwerks übermittelt werden 104.

Die üblicherweise rotierenden Sendeeinrichtungen der Radare 12, 14, 16 ermöglichen es, die zu übermittelnden Daten 104 anisotrop in eine vorbestimmte Richtung zu übermitteln 112. Dadurch können die zu übermittelnden Daten 104 lediglich an vorbestimmte Empfänger gerichtet werden. Dies trägt zu einer hohen Übertragungssicherheit und einer hohen Abhörsicherheit bei. Ferner können dadurch unterschiedlichen Kommunikationsteilnehmern 12, 14, 16, 18, 20 gezielt unterschiedliche Daten übermittelt werden 104.

Um stets einen Empfang der übermittelten 104 Daten gewährleisten zu können, weist jeder der fünf Kommunikationsteilnehmer 12, 14, 16, 18, 20 eine separate Empfangseinrichtung 22 auf. Diese separate Empfangseinrichtung 22 ist vorzugsweise als eine feststehende, isotrope Antenne ausgeführt, mittels welcher aus beliebigen Raumrichtungen stammende Daten empfangbar sind. Alternativ ist denkbar, dass ein Empfang von Daten mittels einer zum Zwecke einer Durchführung 106 der Richtungs- und Abstandsmessung vorgesehene und nicht näher dargestellte Empfangseinrichtung eines Radars 12, 14, 16 realisiert wird.

FIG 1 illustriert des Weiteren beispielhaft ein Einsatzszenario, bei welchem ein erstes Radar 12 der drei genannten Radare 12, 14, 16 mit geringem Abstand zu einem Frontverlauf oder einem gegnerischen Gebiet platziert wird. Dies ermöglicht es, frühzeitig gegnerische Aktivitäten zu erkennen, aufzuklären und gegebenenfalls Gegenmaßnahmen einzuleiten. Allerdings besteht auch für das erste Radar 12 eine erhöhte Gefahr, dass dieses von einem Gegner aufgeklärt wird. Eine Herstellung einer kabelgebundenen Kommunikationsverbindung zu dem taktischen Lagezentrum 18 ist daher mit hohen Gefahren verknüpft. Ferner muss aufgrund der Nähe zu einem Gegner eine erhebliche Distanz du dem taktischen Lagezentrum 18 vorgesehen werden. Um eine Aufklärung des ersten Radars 12 zu erschweren, wird dieses regelmäßig versetzt. Im Falle einer kabelgebundenen Kommunikationsverbindung muss diese ebenfalls verändert werden. Dies geht mit einem großen logistischen, personellen und zeitlichen Aufwand einher. Des Weiteren wird dadurch eine Wiederinbetriebnahme des ersten Radars 12 nach einem Versetzen verzögert.

Beispielhaft ist ein zweiter Radar 14 der drei genannten Radare 12, 14, 16 anhand der Kommunikationsleitung 24 mit dem taktischen Lagezentrum 18 zum Zwecke einer Datenübertragung verbunden. Mittels der Kommunikationsleitung 24 erhaltene Daten können daher mittels des zweiten Radars 14 an übrige der Kommunikationsteilnehmer 12, 16, 18, 20 auf Grundlage emittierter 102 Messsignale übermittelt werden 104. Im vorliegend beschriebenen Einsatzszenario befindet sich der erste Radar 12 allerdings außerhalb eines Sichtbereichs des zweiten Radars 14. Ferner liegt das taktische Lagezentrum 18 exemplarisch außerhalb eines Sichtbereichs des ersten Radars 12 und kann daher nicht unmittelbar Daten von dem ersten Radar 12 empfangen. Mithilfe des vermaschten Netzwerks können jedoch Daten von dem ersten Radar 12 zu dem zweiten Radar 14 oder umgekehrt übermittelt werden 104, indem diese mittels eines dritten Radars 16 der drei genannten Radare 12, 14, 16 weitergeleitet werden 114. Dementsprechend ist beispielhaft vorgesehen, dass Daten mittels eines Messsignals von dem ersten Radar 12 hin zu dem dritten Radar 16 übermittelt werden 104. Daraufhin werden die durch das dritte Radar 16 empfangenen Daten an das erste Radar 12 weitergeleitet 114. Um eine Abhörsicherheit zu erhöhen, ist des Weiteren vorgesehen, dass mittels des dritten Radars 16 Daten anisotrop übermittelt werden 112. Vorliegend werden die Messsignale und damit die zu übermittelnden 104 Daten lediglich in einen vorbestimmten Raumbereich emittiert 102, in welchem sich in der erste Radar 12 befindet. Ein Abhören der in die emittierten 102 Messsignale integrierten Daten durch Dritte wird dadurch erheblich erschwert. Mithilfe einer Weiterleitung 114 der zu übermittelnden Daten 104 können anhand des ersten Radars 12 erfasste Informationen auf eine zuverlässige Weise an das taktische Lagezentrum 18 sowie Informationen und/oder Anweisungen aus dem taktischen Lagezentrum 18 an das erste Radar 12 übermittelt werden 104. Ferner ermöglicht dies, den ersten Radar 12 unabhängig von dessen Sichtbereich auf das taktische Lagezentrum 18 oder auf den zweiten Radar 14 zu versetzen und/oder zu platzieren.

Im Bedrohungsfall kann des Weiteren der Effektor 20 mit Daten des ersten Radars 12 unmittelbar versorgt werden. Beispielhaft wird der Effektor 20 zunächst mit Zieleinweisungsdaten versehen, welche diesem mittels des taktischen Lagezentrums 18 übermittelt werden. Nach einem Starten des Effektors 20 tritt häufig der Fall ein, dass dieser aus dem unmittelbaren Sichtbereich eines oder mehrerer der Radare 12, 14, 16 tritt. Beispielhaft können daraufhin mittels des ersten Radars 12 Daten ausgehend von dem taktischen Lagezentrum 18 oder unmittelbar auf einer Durchführung 106 einer Richtungs- und Abstandsmessung hervorgehende Daten an den Effektor 20 übermittelt werden 104. Beispielhaft können auf diese Weise dem Effektor 20 Informationen betreffend seine Position sowie betreffend einer Position eines Ziels auf Grundlage der mittels des ersten Radars 12 emittierten 102 Messsignale übermittelt werden 104.

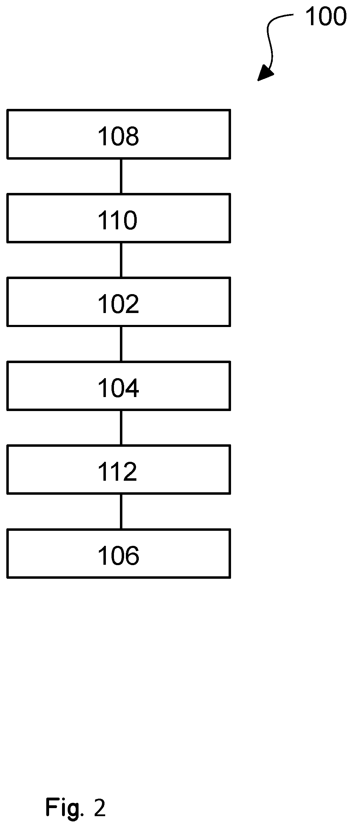

FIG 2 illustriert das im Zusammenhang mit FIG 1 beschriebene Beispiel des Verfahrens 100 sowie eine bevorzugte Ausführungsvariante, mithilfe derer Daten auf Grundlage der emittierten 102 Messsignale übertragen werden 104.

In der bevorzugten Ausführungsvariante wird einer vorbestimmten Frequenz eines Messsignals der mehreren Messsignale jeweils eine vorbestimmte Information zugeordnet 108. Im vorliegenden Beispiel des Verfahrens 100 handelt es sich bei der vorbestimmten Information jeweils um eine binäre Zeichenfolge. Einer vorbestimmten Frequenz eines Messsignals wird daher eine vorbestimmte binäre Zeichenfolge zugeordnet 108, mittels welcher die zu übermittelnden 104 Daten nachgebildet werden 110. Die zu übermittelnden 104 Daten werden in diesem Zusammenhang derart in mehrere Abschnitte aufgeteilt, dass einem jeden Abschnitt eine der vorbestimmten Informationen, also eine vorbestimmte binäre Zeichenfolge, zuordenbar ist 108. Auf diese Weise wird auf Grundlage der vorbestimmten Informationen eine Reihenfolge derselben ermittelt, welche die zu übermittelnden 104 Daten repräsentieren. Nach Maßgabe der genannten Reihenfolge werden sodann die jeweils diesen vorgegebenen Informationen zugeordneten 108 Messsignale mit vorbestimmter Frequenz emittiert 102. Unter Kenntnis der genannten Zuordnung 108 kann ein Empfänger sodann auf Grundlage gemäß einer vorbestimmten Reihenfolge empfangener Messsignale mit vorbestimmten Frequenzen die zu übermittelnden 104 Daten rekonstruieren. Auf diese Weise kann eine beliebig komplexe Verschlüsselungsmethode zum Zwecke der Übermittlung 104 der Daten gewählt werden. Dadurch kann eine hohe Übertragungssicherheit erreicht werden. Ferner kann vorgesehen sein, dass die Zuordnung 108 der vorbestimmten Informationen zu vorbestimmten Frequenzen eines Messsignals regelmäßig verändert wird. Einer Dechiffrierung der genannten Zuordnung 108 kann dadurch effektiv entgegengewirkt werden.

### Bezugszeichenliste

- 100: Verfahren
- 102: Messsignal emittieren
- 104: Daten übermitteln
- 106: Richtungs- und Abstandsmessung durchführen
- 108: Information zuordnen
- 110: Daten nachbilden
- 112: anisotrop Übermitteln
- 114: Daten weiterleiten

- 10: System
- 12: Kommunikationsteilnehmer/Radar
- 14: Kommunikationsteilnehmer/Radar
- 16: Kommunikationsteilnehmer/Radar
- 18: Kommunikationsteilnehmer/taktisches Lagezentrum
- 20: Kommunikationsteilnehmer/Effektor
- 22: separate Empfangseinrichtung
- 24: Kommunikationsleitung

## Patentansprüche

1. Verfahren (100), bei welchem
- mehrere Messsignale emittiert werden (102);
- mittels der emittierten (102) Messsignale Daten von einem ersten Kommunikationsteilnehmer zu einem zweiten Kommunikationsteilnehmer übermittelt werden (104);
- auf Grundlage einer Reflexion wenigstens eines der mehreren Messsignale eine Richtungs- und Abstandsmessung mittels des ersten Kommunikationsteilnehmers durchgeführt wird (106).

2. Verfahren (100) nach Anspruch 1,
bei welchem Messsignale vorbestimmter Frequenz der mehreren Messsignale nach Maßgabe einer vorbestimmten Reihenfolge emittiert werden (102).

3. Verfahren (100) nach Anspruch 1 oder 2,
bei welchem
- einer vorbestimmten Frequenz eines Messsignals der mehreren Messsignale jeweils eine vorbestimmte Information zugeordnet wird (108);
- die zu übermittelnden (104) Daten auf Grundlage der vorbestimmten Informationen nachgebildet werden (110);
- nach Maßgabe einer Reihenfolge der die zu übermittelnden (104) Daten nachbildenden (110) vorbestimmten Informationen jeweils diesen Informationen zugeordnete (108) Messsignale mit einer vorbestimmten Frequenz emittiert werden (102).

4. Verfahren (100) nach Anspruch 3,
bei welchem als die vorbestimmte Information, eine binäre Information, eine Dezimalzahl, eine Hexadezimalzahl und/oder eine binäre, dezimale oder hexadezimale Zeichenfolge vorgesehen wird.

5. Verfahren (100) nach einem der vorhergehenden Ansprüche,
bei welchem als die mehreren Messsignale jeweils Funkwellen eines Radars mit vorbestimmter Pulsdauer emittiert werden (102).

6. Verfahren (100) nach einem der vorhergehenden Ansprüche,
bei welchem mittels der emittierten (102) Messsignale Daten anisotrop von einem ersten Kommunikationsteilnehmer zu einem zweiten Kommunikationsteilnehmer übermittelt werden (112).

7. Verfahren (100) nach einem der vorhergehenden Ansprüche,
bei welchem die zu übermittelnden (104) Daten mittels eines weiteren Kommunikationsteilnehmers von dem ersten Kommunikationsteilnehmer zu dem zweiten Kommunikationsteilnehmer weitergeleitet werden (114).

8. Verfahren (100) nach einem der vorhergehenden Ansprüche,
bei welchem die Messsignale mittels eines Richtungs- und Abstandsmessgeräts, vorzugsweise mittels eines Radars, emittiert werden (102).

9. System (10) zur Durchführung des Verfahrens (100) nach einem der vorhergehenden Ansprüche aufweisend:
- mehrere Kommunikationsteilnehmer (12, 14, 16, 18, 20) zwischen welchen Daten kabellos übermittelbar sind;
- ein erster der mehreren Kommunikationsteilnehmer (12, 14, 16) dazu eingerichtet ist, mittels eines Messsignals Daten zu übermitteln;
- ein zweiter der mehreren Kommunikationsteilnehmer (12, 14, 16, 18, 20) dazu eingerichtet ist, die mittels des Messsignals übermittelten Daten zu empfangen.

10. System (10) nach Anspruch 9,
**dadurch gekennzeichnet, dass**
die mehreren Kommunikationsteilnehmer (12, 14, 16, 18, 20) ein vermaschtes Netzwerk bilden.

11. System (10) nach Anspruch 9 oder 10,
**dadurch gekennzeichnet, dass**
zumindest der erste der mehreren Kommunikationsteilnehmer (12, 14, 16) als ein Richtungs- und Abstandsmessgerät, vorzugsweise als ein Radar (12, 14, 16), ausgeführt ist.

12. System (10) nach Anspruch 9 bis 11,
**dadurch gekennzeichnet, dass**
zumindest ein Teil der mehreren Kommunikationsteilnehmer (12, 14, 16, 18, 20) eine separate Empfangseinrichtung (22) für die zu übermittelnden Daten aufweist.

13. System (10) nach einem der Ansprüche 9 bis 12
**dadurch gekennzeichnet, dass**
wenigstens einer der mehreren Kommunikationsteilnehmer (18) als ein taktisches Lagezentrum (18) ausgeführt ist.

14. Computerprogramm, welches bei dessen Ausführung das System (10) gemäß einem der Ansprüche 9 bis 13 dazu veranlasst, das Verfahren (100) nach einem der Ansprüche 1 bis 8 durchzuführen.

15. Computerlesbares Medium aufweisend Instruktionen, welche das System (10) gemäß einem der Ansprüche 9 bis 13 dazu veranlasst, das Verfahren (100) nach einem der Ansprüche 1 bis 8 durchzuführen.
